# EUROPÄISCHE PATENTSCHRIFT

(11) **EP 1 426 645 B1**
(45) Veröffentlichungstag und Bekanntmachung des Hinweises auf die Patenterteilung: **20.04.2005**
(21) Anmeldenummer: 03027481.5
(22) Anmeldetag: 01.12.2003
(51) Int. Cl.: F16D 65/14

(54) **Bremsaktuator**
Brake actuator
Actionneur de frein

(30) Priorität: 04.12.2002 DE 10256670
(43) Veröffentlichungstag der Anmeldung: 09.06.2004
(73) Patentinhaber: Bosch Rexroth AG, 70184 Stuttgart (DE)
(72) Erfinder: Hutzelmann, Werner, 97782 Gräfendorf (DE); Laube, Martin, 97816 Lohr (DE); Schäfer, Wolfgang, 97855 Triefenstein (DE)
(74) Vertreter: Winter, Brandl,&Fürniss, Hübner Röss, Kaiser, Polte Partnerschaft Patent- und Rechtsanwaltskanzlei

(56) Entgegenhaltungen:
- EP-A- 0 334 434
- EP-A- 0 666 431
- DE-A- 1 506 551
- DE-A- 19 818 157

## Beschreibung

Die Erfindung betrifft einen elektromechanischen Bremsaktuator gemäss dem Oberbegriff des Patentanspruchs 1.

Derartige Bremsaktuatoren werden zur Betätigung von Scheibenbremsen oder dergleichen eingesetzt. In der EP 0 666 431 B1 ist ein Bremsaktuator offenbart, bei dem in einem Gehäuse ein Betätigungsstössel geführt ist, der über einen Federspeicher in Richtung Bremsbetätigung vorgespannt ist. Zum Lüften der Bremse kann der Betätigungsstössel durch Ansteuerung eines Elektromotors und eines Untersetzungsgetriebes gegen die Kraft des Federspeichers axial verschoben werden. Bei dieser bekannten Lösung ist das Untersetzungsgetriebe mit einem Drehkeil ausgeführt, der einerseits am Gehäuse abgestützt ist und andererseits auf den Betätigungsstössel wirkt.

In der DE-OS 1 506 551 ist ein Bremsaktuator offenbart, bei dem man anstelle des Drehkeilgetriebes eine Spindelanordnung mit Kugelumlaufgewindemutter verwendet wird, um einen Betätigungsstössel zum Lösen des Bremseingriffs in Axialrichtung zu verschieben. Der Stössel ist - ähnlich wie bei der vorbeschriebenen Lösung - mittels eines Federspeichers in Richtung Bremseingriff vorgespannt. Zur Dämpfung von Stößen, die beispielsweise aus einer Welligkeit oder einem Seitenschlag der Bremsscheibe resultieren können, ist eine Ankerwelle eines die Kugelumlaufgewindemutter antreibenden Elektromotors über ein Federpaket in Axialrichtung abgestützt.

Bei den vorbeschriebenen Lösungen handelt es sich um Federspeicherbremsen, bei denen der Betätigungsstössel über einen Federspeicher in eine Richtung - vorzugsweise in Richtung Bremseingriff - vorgespannt ist, so dass die Bremse bei nicht betätigen des Elektromotors automatisch aktiviert wird.

In der DE 198 18 157 A1 ist ein sogenannter vollaktiver Bremsaktuator beschrieben, bei dem sowohl das Aktivieren als auch das Lüften der Bremse über einen elektromechanischen Antrieb mit einem Rollgewindetrieb erfolgt, so dass auf den Federspeicher verzichtet werden kann.

Nachteilig bei den vorgenannten Lösungen ist, dass von aussen kommende Stösse direkt auf die Betätigungseinheit - im vorliegenden Fall den Rollgewindetrieb, das Drehkeilgewinde oder den Kugelumlaufgewindetrieb - wirkt und somit die Gefahr eines Ausfalls der Bremse durch Beschädigung der funktionalen Bauelemente besteht.

Dem gegenüber liegt der Erfindung die Aufgabe zugrunde, einen Bremsaktuator zu schaffen, bei dem die Gefahr einer Beschädigung vermindert ist.

Diese Aufgabe wird durch einen Bremsaktuator mit den Merkmalen des Patentanspruchs 1 gelöst.

Erfindungsgemäss hat der Bremsaktuator ein Gehäuse, in dem eine Betätigungseinheit, beispielsweise ein Rollgewindetrieb zur Axialverschiebung einer Spindelstange gelagert ist. Am Gehäuse und an der Spindelstange sind Anlenkungen für die Bremsbetätigungselemente vorgesehen, so dass durch Axialverschiebung der Spindelstange die Bremse aktiviert oder gelüftet werden kann. Erfindungsgemäss ist das Gehäuse zweiteilig ausgeführt, wobei ein die gehäuseseitige Anlenkung tragendes Gehäuseendstück über eine Federanordnung an einem Teilgehäuse abgestützt ist, in dem die Betätigungseinheit gelagert ist. D. h., erfindungsgemäss ist in dem Kraftwirkungspfad des Aktuators eine Federanordnung vorgesehen, die diesem eine gewisse Elastizität gibt. Über die Federanordnung können von aussen kommende Stösse zuverlässig gedämpft werden, so dass die Wahrscheinlichkeit einer Beschädigung reduziert ist. Aufgrund der sich durch die Federanordnung zwischen den beiden Gehäuseteilen bestimmten Elastizität des Aktuators, ergeben sich bei Kraftänderungen auch definierte Hubänderungen der Federanordnung. Dies erleichtert die Realisierung einer feinfühligen Kraftregelung für die Bremsbetätigung.

Ein weiterer wesentlicher Vorteil der erfindungsgemässen Anordnung besteht darin, dass durch die Elastizität der Federanordnung eine Art Parkbremse realisierbar ist. Dabei wird durch Axialverschiebung der Spindelstange aktiv eine Bremskraft aufgebracht und anschliessend der Motor bei anliegendem Moment passiv festgebremst. Anschliessend wird der Aktuator abgeschaltet, wobei aufgrund der Elastizität der Federanordnung die Bremskraft auch bei Maßänderungen, verursacht beispielsweise durch das Abkühlen des Aktuators oder der Bremsscheibe annähernd konstant gehalten werden kann.

Bei einem besonders bevorzugten Ausführungsbeispiel der Erfindung ist die Federanordnung als Tellerfederpaket ausgebildet, wobei sich durch Parallel- und in Reihe schalten von Tellerfedern eine progressive Federkennlinie einstellen lässt.

Für den Fall, dass eine Kraftregelung des Bremsaktuators vorgesehen ist, kann in das Gehäuseendstück eine Kraftmesseinrichtung integriert werden. Diese kann beispielsweise durch einen auf einen Meßaufnehmer wirkenden Kolben gebildet sein, der über ein Axialgelenlager an einem Federteller der Federanordnung abgestützt ist.

Bei einem besonders bevorzugten Ausführungsbeispiel wird die Federanordnung mittels einer Stelleinrichtung vorgespannt, wobei diese Stelleinrichtung derart ausgebildet ist, dass bei eingerückter Bremse und einem entsprechenden Hub der Federanordnung, diese noch einen Resthub zum Notlösen des Bremseingriffs durchführen kann. D. h., bei diesem Ausführungsbeispiel kann die Federanordnung durch Anziehen der Stelleinrichtung einen Resthub durchführen, der ausreicht, um die Bremse zu lüften.

Bei einer besonders einfach ausgeführten Variante der Erfindung ist diese Stelleinrichtung durch zwei diametral angreifende Spannschrauben gebildet.

Es wird besonders bevorzugt, den Bremsaktuator voll aktiv - d. h., ohne Federspeicher - auszuführen, wobei die Betätigungseinrichtung durch eine Spindelanordnung mit einer vom Antriebsmotor angetriebenen Spindelmutter gebildet ist, in der eine die Betätigungsstange tragende axialverschiebbare Spindel drehfest gelagert ist.

Bei einem besonders bevorzugten Ausführungsbeispiel wird die Spindel innerhalb der Spindelmutter über zwei axial beabstandete Lager geführt und bei einer besonders kompakten Lösung erfolgt der Eingriff zwischen der Spindelmutter und der Spindel rückseitig im Bereich der Federanordnung, während die Radialführung im Axialabstand davon im Bereich des Antriebs ausgebildet ist.

Der Antrieb des Bremsaktuators ist besonders robust, wenn die Betätigungseinrichtung als Rollgewindetrieb ausgeführt ist.

Sonstige vorteilhafte Weiterbildungen der Erfindung sind Gegenstand sonstiger Unteransprüche.

Im folgenden wird ein bevorzugtes Ausführungsbeispiel der Erfindung anhand schematischer Zeichnungen näher erläutert. Wir zeigen:
Figur 1 dreidimensionale Darstellungen eines erfindungsgemässen Bremsaktuators;
Figur 2 einen Längsschnitt durch den Bremsaktuator aus Figur 1;
Figur 3 ein Schnitt entlang der Linie C-C in Figur 1 und
Figur 4 ein Schnitt entlang der Linie B-B in Figur 1.

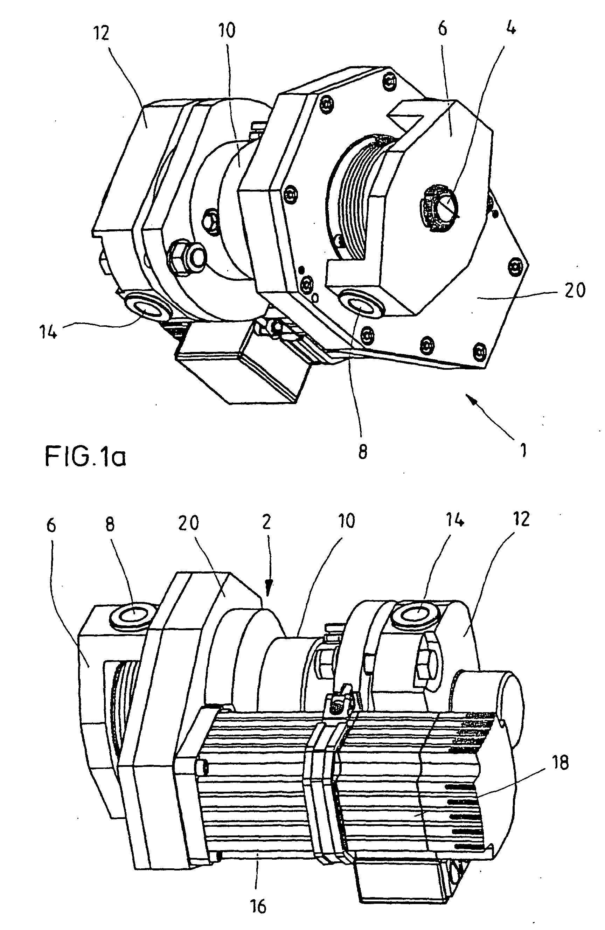

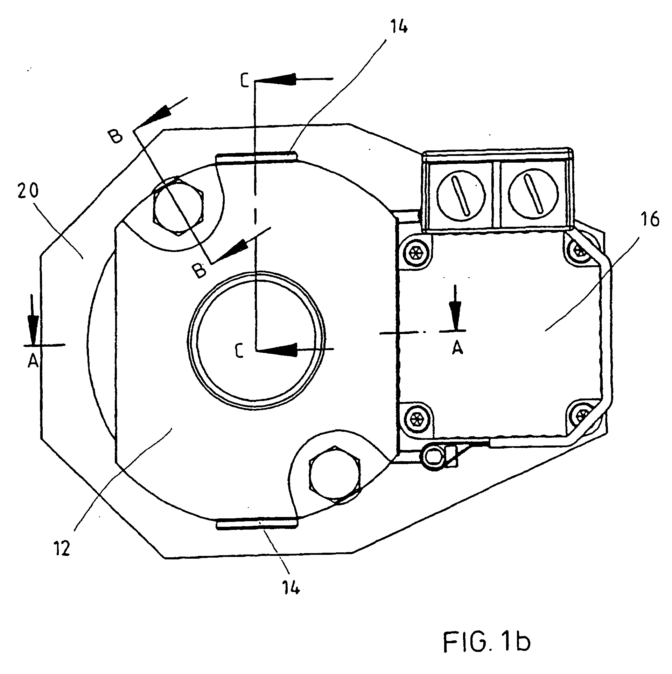

Figur 1 zeigt drei Ansichten eines erfindungsgemässen elektromechanischen Bremsaktuators 1. Dieser hat ein Gehäuse 2, in dem eine Spindelstange 4 axialverschiebbar geführt ist. Die Spindelstange 4 trägt an einem aus dem Gehäuse 2 vorstehenden Endabschnitt eine U-förmige Anlenkplatte, an deren parallel verlaufenden Seitenschenkeln zwei Anlenkabschnitte 8 zur Anlenkung eines Bremsgestänges angeordnet ist.

Das Gehäuse 2 ist mehrteilig mit einem Teilgehäuse 10 und einem Gehäuseendstück 12 ausgebildet, an dem zwei weitere Anlenkabschnitte 14 ausgebildet sind, an denen der gehäuseseitige Teil des Bremsgestänges befestigt wird. Der Antrieb des Bremsaktuators 1 erfolgt mittels eines Elektromotors 16, der mit einer elektrisch zu öffnenden Federdruckbremse 18 ausgeführt ist. Über diese Federdruckbremse 18 kann der Elektromotor 16 in einer vorbestimmten Bremsposition festgelegt werden, so dass er auch bei Stromlosschalten in dieser Bremsposition verbleibt.

Der Elektromotor 18 ist an einen Getriebekasten 20 angeflanscht und über ein Getriebe mit einem Spindeltrieb verbunden, über den die Spindelstange 4 axial verschiebbar ist. Beim im Folgenden näher beschriebenen Ausführungsbeispiel ist der Spindeltrieb als Rollgewindetrieb ausgeführt. Wie Figur 1 entnehmbar, verläuft die Achse des Elektromotors 16 achsparallel zur Achse des Spindeltriebs.

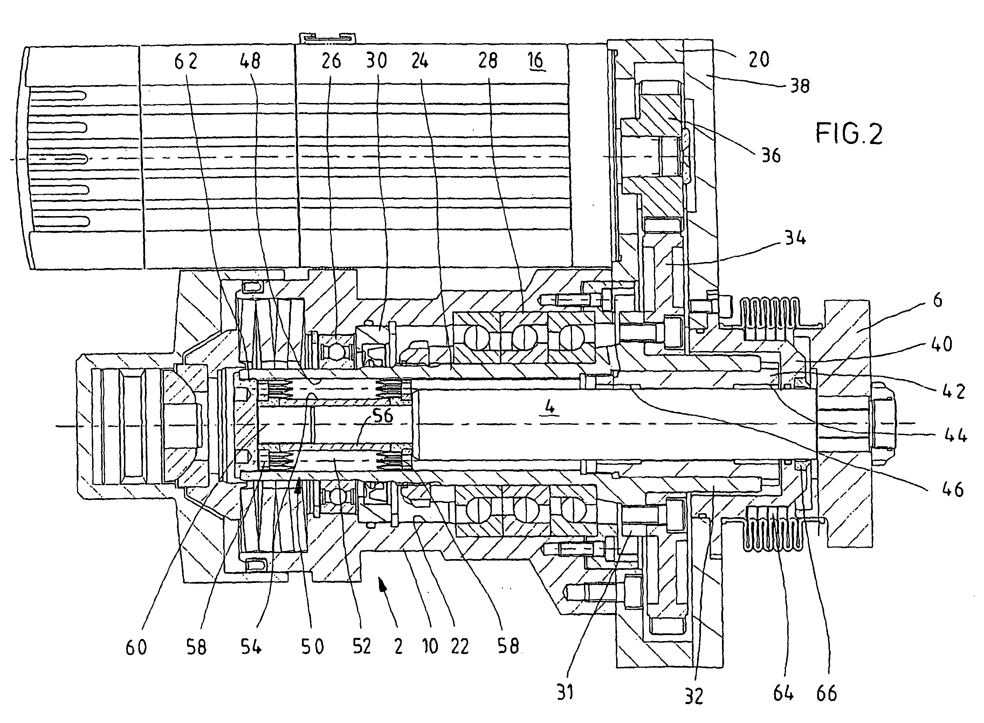

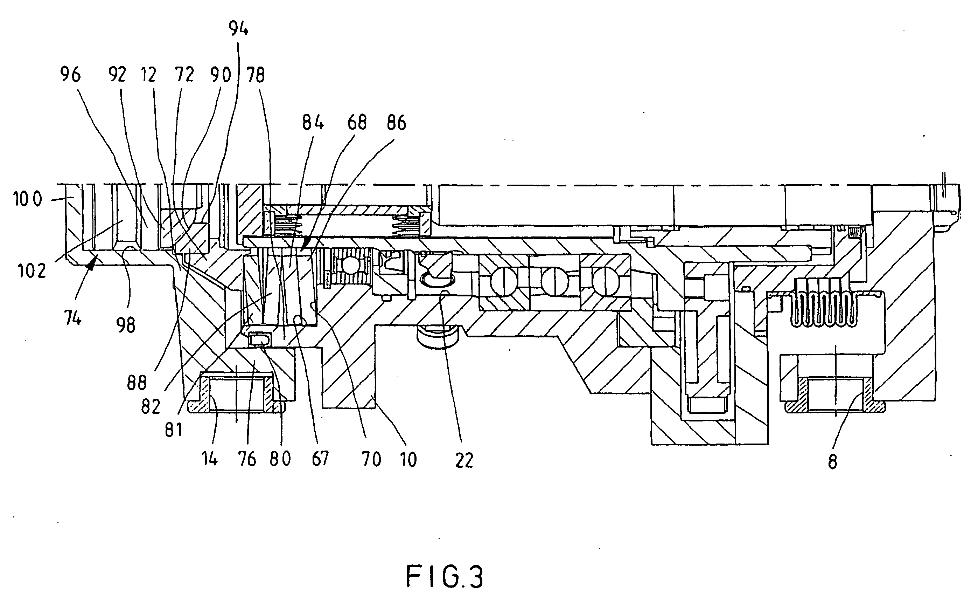

Gemäß den Schnittdartellungen in den Figuren 2 und 3 umgreift das Teilgehäuse 10 eine sich stufenförmig zu ihren beiden stirnseitigen Endabschnitten hin erweiternde Aufnahmebohrung 22, in der eine Spindelmutter 24 über eine Lageranordnung mit einem Radiallager 26 sowie drei Schrägkugellagern 28 gelagert ist. Zwischen den Kugellagern 26, 28 ist eine Dichtungsanordnung 30 vorgesehen.

Die axiale Festlegung von Innen- und Aussenringen der Kugellager 26, 28 erfolgt in herkömmlicher Weise durch geeignet ausgebildete Schultern des Teilgehäuses 10 bzw. der Spindelmutter 24 und durch Spannringe oder Sprengringe, auf deren explizite Beschreibung verzichtet werden kann.

Die Lageranordnung ist derart ausgeführt, dass die Spindelmutter 24 mit Bezug zum Teilgehäuse 10 axial nicht verschiebbar ist.

Die Spindelmutter 24 hat an ihrem in Figur 2 rechten Endabschnitt einen radial vorspringenden Befestigungsflansch 31, an den sich ein zylinderförmiger Endabschnitt 32 der Spindelmutter 24 anschliesst. Auf diesen ist ein Großrad 34 aufgesetzt, das mit dem Befestigungsflansch 31 verschraubt ist. Das Großrad 34 und der Befestigungsflansch 31 sind in dem Getriebekasten 20 angeordnet, der stirnseitig auf das Teilgehäuse 10 aufgesetzt ist. Im Achsabstand zur Spindelmutter 24 ist am Getriebekasten 20 der Elektromotor 16 angeflanscht, dessen Ritzel 36 mit dem Großrad 34 kämmt.

Den stirnseitigen Abschluss des Gehäuses 2 bildet ein Deckel 38 des Getriebekastens 20, auf den eine den Endabschnitt 32 der Spindelmutter 24 umgreifender nabenförmige Abdeckung 40 aufgesetzt ist.

In den Endabschnitt 32 der Spindelmutter 24 ist eine Lagerhülse 42 eingesetzt, an der zwei axial beabstandete Gleitlager 44, 46 vorgesehen sind, über die die Spindelstange 4 in Radialrichtung geführt ist. Der Abstand der beiden Gleitlager 44, 46 ist zur besseren Abstützung der Spindelstange 4 möglichst groß gewählt und überstreckt denjenigen Bereich, in dem das Großrad 34 an der Spindelstange 4 befestigt ist.

Erfindungsgemäss ist das Spiel im Bereich der Gleitführungen 44, 46 geringer als das Spiel im Bereich des Rollgewindetriebs 50, so dass die auftretenden Kräfte sicher aufgenommen werden können. Durch die zweifache Gleitführung (Führungen 44, 46) werden Radial- und Biegebelastungen aus äusseren Kräften (beispielsweise verursacht durch Eigengewicht, durch Schock-/Vibrationsbelastung) in diesem Bereich aufgenommen und von dem Rollgewindetrieb ferngehalten.

Wie bereits eingangs erwähnt, sind die Spindelmutter 24 und die Spindelstange 4 mittels eines Rollgewindetriebs 50 miteinander verbunden. Dieser ist an dem von der Lagerhülse 42 entfernten Endabschnitt der Spindelmutter 24 ausgebildet. Hierzu ist an dem in Figur 2 linken Endabschnitt der Spindelmutter 24 ein Innengewinde 48 vorgesehen, das mit mehreren, jeweils mit einem Aussengwinde versehenen Wälzkörpern 52 kämmt. Diese stehen mit ihrem Aussenumfang in Eingriff mit einem Aussengewinde 54 einer Gewindehülse 56, die drehfest mit der Spindelstange 4 verbunden ist. Seitlich der Gewindehülse 56 sind des Weiteren noch Lagerringe 58 vorgesehen, in denen die Wälzkörper 52 drehbar gelagert sind.

Die Lagerringe 58 und die dazwischen liegende Gewindehülse 56 sind auf einen radial zurückgesetzten Zapfen 60 der Spindelstange 4 aufgesetzt. Die Axiallänge des Innengewindes 48 der Spindelmutter 24 entspricht dabei zumindest der Axiallänge des Zapfens 60 (oder genauer gesagt: der der Länge Wälzkörper 52 + dem gewünchten Hub der Spindelstange 4. Im Unterschied zu herkömmlichen Lösungen ist somit bei dem erfindungsgemässen Bremsaktuator ein "invertierter" Rollgewindetrieb 50 realisiert, bei dem das kürzere Gewinde praktisch an der Spindelstange 4 und das längere Gewinde an der Spindelmutter 24 ausgebildet ist, während bei herkömmlichen Lösungen die Spindelmutter mit dem kürzeren und die Spindelstange mit dem längeren Gewinde ausgeführt ist.

Auf das in Figur 2 linke Ende der Spindelmutter 24 ist ein Deckel 62 aufgesetzt, die den stirnseitigen Abschluss der Spindelstange 4 bildet.

Der vom Deckel 62 entfernte Endabschnitt der Spindelstange 4 durchsetzt die Abdeckung 40. Auf den aus dem Gehäuse 2 hervorstehenden Endabschnitt ist die eingangs beschriebene Anlenkplatte 6 mit den beiden Anlenkabschnitten 8 (siehe Figur 3) aufgesetzt. An der Abdeckung 40 und an der Anlenkplatte 6 ist eine Manschette 64 befestigt, über die in Zusammenwirken mit Dichtungen 66 das Eindringen von Schmutz in die Spindelanordnung verhinderbar ist.

Wie aus den Figuren 2 und 3 hervorgeht, ist der linke Endabschnitt der Aufnahmebohrung 22 zu einem Aufnahmeraum 67 erweitert. In diesem ist ein Tellerfederpaket 68 aufgenommen, das an einer Ringschulter 70 des Aufnahmeraums 67 abgestützt ist. Dieses Tellerfederpaket 68 ist über einen Federteller 72 und über eine im folgenden noch näher beschriebene Kraftmesseinrichtung 74 am Gehäuseendstück 12 abgestützt. Dieses hat einen axial in Richtung zum Teilgehäuse 10 vorspringenden ringförmigen Führungsabschnitt 76, der einen Führungsvorsprung 78 des Teilgehäuses 10 umgreift. Zur Abdichtung ist zwischen dem Führungsabschnitt 76 und dem Führungsvorsprung 78 eine elastische Dichtlippe 80 vorgesehen.

Bei dem dargestellten Ausführungsbeispiel besteht das Tellerfederpaket 68 aus vier Tellerfedern, von denen hinsichtlich ihrer Wirkung zwei (81, 82) in Reihe geschaltet und zwei (84, 86) parallel geschaltet sind, so dass sich eine progressive Federkennlinie einstellt. Der Federteller 72 greift in der in Figur 3 links liegenden, in Reihe geschalteten Tellerfeder 81 an. An der von dieser Tellerfeder 81 entfernten Rückseite des Federtellers 72 ist ein Axialgelenklager, mit einem Stützring 88 mit einer konkav gekrümmten Lageraufnahme 90 und einem auf dieser aufgestützten konvex gekrümmten Gelenkkörper 92 abgestützt. Der Gelenkkörper 92 ist ebenfalls ringförmig ausgebildet, wobei in eine Innenbohrung 94 ein Axialvorsprung eines Kolbens 96 eintaucht. Dieser ist axial verschiebbar in einem Kolbenraum 98 geführt, der in einem Meßvorsprung 100 des Teilgehäuses 12 vorgesehen ist. Der Kolben 96 stützt sich auf einem Meßaufnehmer, beispielsweise einem Piezomeßaufnehmer 102 ab, der in Abhängigkeit von der über den Kolben auf ihn einwirkenden Kraft ein Signal an eine Regelungseinheit abgibt, über die der Elektromotor 16 angesteuert wird.

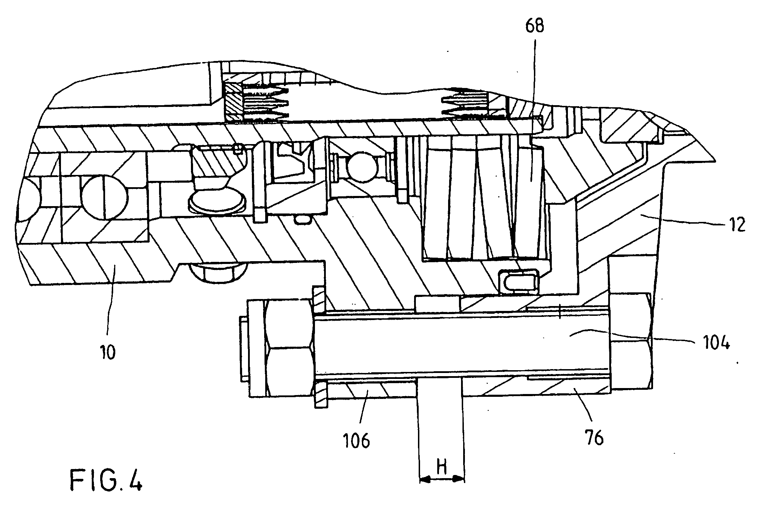

Die Vorspannung des Tellerfederpaketes 68 erfolgt gemäss den Figuren 4 und 1 mittels zweier diametral zueinander angeordneten Spannschrauben 104, die einen Spannflansch 106 des Teilgehäuses 10 und den ringförmigen Führungsabschnitt 76 des Gehäuseendstücks 12 parallel zur Tellerfederachse durchsetzen.

Der bei vorgespanntem Tellerfederpaket 68 verbleibende Hub H ist so gewählt, dass bei voll betätigter Bremse dieser Resthub H so groß ist, dass durch Anziehen der beiden Spannschrauben 104 die Spannung aus dem Bremsgestänge genommen und somit die Bremse gelöst werden kann. D. h., die beiden Spannschrauben 104 können zum Notlösen des Bremseingriffs verwendet werden.

Durch das Axialgelenklager mit dem Stützring 88 und dem Gelenkkörper 92 wird eine zentrische und momentenfreie Beaufschlagung des Kolbens 96 und damit des Meßaufnehmers 102 gewährleistet, da dieser Kolben 96 von dem auf das Tellerfederpaket 68 wirkenden Federteller 72 abgekoppelt ist. Durch das Axialgelenklager (88, 92) und das Tellerfederpaket 68 entsteht ein zusätzlicher Freiheitsgrad zwischen den Anlenkpunkten an die Bremszange. Über diesen zusätzlichen Freiheitsgrad lassen sich Verformungen innerhalb der Bremszange ausgleichen, ohne dass der Bremsaktuator 1 mit Biegemomenten belastet wird.

Die Figuren zeigen den Bremsaktuator 1 im unbetätigten Zustand, d. h., die Spindelstange 4 ist eingefahren, das Tellerfederpaket 68 mit seiner vorbestimmten Vorspannung beaufschlagt. Zum Betätigen der Bremse wird der Elektromotor 16 angesteuert und entsprechend die Spindelmutter 24 über das Ritzel 36 und das Großrad 34 gedreht. Diese Drehung der Spindelmutter 24 wird über den invertierten Rollgewindetrieb in eine Axialverschiebung der Spindelstange 4 umgesetzt - diese fährt aus und das über die Anlenkabschnitte 8, 14 an die Spindelstange 24 und das Teilgehäuse 10 angelenkte Bremsgestänge (nicht dargestellt) betätigt - die Bremse wird aktiviert. Beim Aufbringen der Bremskraft wird das im Kraftwirkungspfad des Bremsaktuators 1 liegende Tellerfederpaket mit einer über der Vorspannung liegenden Kraft beaufschlagt und führt entsprechend einen Hub aus. D. h., Änderungen in der Bremskraft resultieren auch in Änderungen des Hubes des Tellerfederpaketes, so dass durch diese definierte Elastizität eine feinfühlige Kraftregelung in Abhängigkeit von dem vom Meßaufnehmer 103 dedektierten Signal ermöglicht wird. Durch das Tellerfederpaket können des Weiteren von aussen kommende Stöße, die beispielsweise durch eine Welligkeit oder einen Seitenschlag der Bremsscheibe resultieren gedämpft werden, so dass der Bremsaktuator 1 nicht beschädigt wird.

Da die beiden Gleitlager 44, 46 mit der Spindelmutter 24 rotieren und die Spindelstange 4 nur translatorisch bewegt wird, liegt praktisch eine schraubende Relativbewegung zwischen diesen beiden Bauelementen vor.

Bei aktivierter Bremse kann der erfindungsgemäße Bremsaktuator 1 auch als Parkbremse wirken. Dazu wird nach Aufbringen der aktiven Bremskraft der Elektromotor 16 mittels der Federdruckbremse 18 oder einer anderen geeigneten Bremse passiv festgebremst und anschliessend der Aktuator abgeschaltet. Durch die Elastizität der vorgespannten Tellerfedern wird diese Bremskraft auch bei den üblicher Weise auftretenden Maßänderungen, verursacht beispielsweise durch das Abkühlen des Aktuators oder der Bremsscheibe ausgeglichen.

Zum Lüften der Bremse wird ggf. die Federdruckbremse 18 elektrisch gelöst und der Elektromotor 16 mit umgekehrter Drehrichtung angesteuert, so dass die Spindelstange 4 über den Rollgewindetrieb 50 in die in Figur 2 dargestellte Grundstellung eingefahren wird - die Spannung wird aus dem Bremsgestänge herausgenommen und die Bremse gelüftet.

Anstelle des vorbeschriebenen Rollgewindetriebs 50 kann prinzipiell auch ein anderes Getriebe zur Umsetzung einer Rotationsbewegung einer Mutter in eine Translationsbewegung einer Spindelstange 4 verwendet werden.

Offenbart ist ein elektromechanisch betätigter Bremsaktuator, bei dem in einem Gehäuse eine Betätigungseinheit mit einer axialverschiebbaren, aus dem Gehäuse herausgeführten Spindelstange gelagert ist. An einem rückwärtigen Teil des Gehäuses und am Endabschnitt der aus dem Gehäuse hervorstehenden Spindelstange sind Anlenkungen für Bremsbetätigungselemente vorgesehen. Erfindungsgemäss ist das Gehäuse mehrteilig ausgeführt, wobei ein die gehäuseseitige Anlenkung tragendes Gehäuseendstück über eine Federanordnung an einem die Betätigungseinheit aufnehmenden Teilgehäuse abgestützt ist.

### Bezugszeichenliste

- 1: Bremsaktuator
- 2: Gehäuse
- 4: Spindelstange
- 6: Anlenkplatte
- 8: Anlenkabschnitt
- 10: Teilgehäuse
- 12: Gehäuseendstück
- 14: Anlenkabschnitt
- 16: Elektromotor
- 18: Federdruckbremse
- 20: Getriebekasten
- 22: Aufnahmebohrung
- 24: Spindelmutter
- 26: Rillenkugellager
- 28: Schrägkugellager
- 30: Dichtungsanordnung
- 31: Befestigungsflansch
- 32: Endabschnitt
- 34: Großrad
- 36: Ritzel
- 38: Deckel
- 40: Abdeckung
- 42: Lagerbuchse
- 44: Gleitlager
- 46: Gleitlager
- 48: Innengewinde
- 50: Rollgewindetrieb
- 52: Wälzkörper
- 54: Aussengewinde
- 56: Gewindehülse
- 58: Lagerring
- 60: Zapfen
- 62: Deckel
- 64: Manschette
- 66: Dichtung
- 67: Aufnahmeraum
- 68: Tellerfederpaket
- 70: Ringschulter
- 72: Federteller
- 74: Kraftmesseinrichtung
- 76: Führungsabschnitt
- 78: Führungsvorsprung
- 80: elastische Dichtlippe
- 81: Tellerfeder
- 82: Tellerfeder
- 84: Tellerfeder
- 86: Tellerfeder
- 88: Stützring
- 90: Lageraufnahme
- 92: Gelenkkörper
- 94: Innenbohrung
- 96: Kolben
- 98: Kolbenraum
- 100: Messvorsprung
- 102: Piezo-Meßaufnehmer
- 104: Spannschrauben
- 106: Spannflansch

## Patentansprüche

1. Elektromechanischer Bremsaktuator mit einem Gehäuse (2), in dem eine von einem Antriebsmotor (16) angetriebene Betätigungseinheit (50) zumindest teilweise aufgenommen ist, wobei an einer aus dem Gehäuse (2) herausgeführten, axial verschiebbaren Spindelstange (4) und am Gehäuse (2) Anlenkungen (8, 14) für Bremsbetätigungselemente ausgebildet sind, **dadurch gekennzeichnet, dass** das Gehäuse (2) geteilt ist und ein die gehäuseseitige Anlenkung (14) tragendes Gehäuseendstück (12) über eine Federanordnung (68) an einem die Betätigungseinheit (50) abstützenden Teilgehäuse (10) abgestützt ist.

2. Bremsaktuator nach Patentanspruch 1, wobei die Federanordnung ein Tellerfederpaket (68) ist.

3. Bremsaktuator nach Patentanspruch 2, wobei Tellerfedern (81, 82) des Tellerfederpaketes (68) in Reihe und weitere Tellerfedern (84, 86) parallel zueinander wirkend angeordnet sind.

4. Bremsaktuator nach einem der vorhergehenden Patentansprüche, wobei im Gehäuseendstück (12) eine Kraftmesseinrichtung (74) vorgesehen ist.

5. Bremsaktuator nach Patentanspruch 4, wobei die Kraftmesseinrichtung (4) einen Kolben (96) hat, der über ein Axialgelenklager (88, 92) und die Federanordnung (68) gegen einen Meßaufnehmer (102) vorgespannt ist.

6. Bremsaktuator nach einem der vorhergehenden Patentansprüche, wobei die Federanordnung (68) in Axialrichtung mittels einer Stelleinrichtung (104) vorgespannt ist, wobei die Federanordnung (68) und die Stelleinrichtung (104) so ausgebildet sind, dass bei eingerückter Bremse noch ein Resthub (H) zum Notlösen des Bremseingriffs möglich ist.

7. Bremsaktuator nach einem der vorhergehenden Patentansprüche, wobei die Stelleinrichtung zwei diametral angreifende Spannschrauben (104) hat.

8. Bremsaktuator nach einem der vorhergehenden Patentansprüche, wobei die Betätigungseinheit eine vom Antriebsmotor (16) angetriebene Spindelmutter (24) hat, in der eine die Spindelstange (4) tragende axial verschiebbare Spindel gelagert ist.

9. Bremsaktuator nach Patentanspruch 8, wobei die Spindel über zwei axial beabstandete Lager (44, 46) in der Spindelmutter (24) radial geführt ist.

10. Bremsaktuator nach Patentanspruch 9, wobei der Eingriff zwischen Spindelmutter (24) und Spindel (4) rückseitig im Bereich der Federanordnung (68) und die Radialführung (44, 46) im Axialabstand davon ausgebildet ist.

11. Bremsaktuator nach Patentanspruch 10, wobei der Antrieb der Spindelmutter (24) im Bereich der Radialführung (44, 46) erfolgt.

12. Bremsaktuator nach einem der Patentansprüche 8 bis 11, wobei die Spindelmutter (24) im Teilgehäuse (10) gelagert ist.

13. Bremsaktuator nach einem der vorhergehenden Patentansprüche, wobei die Betätigungseinheit ein Rollgewindetrieb (50) ist.

## Claims

1. Electromechanical brake actuator having a housing (2), in which an actuation unit (50) which is driven by a drive motor (16) is at least partially received, articulations (8, 14) for brake actuation elements being formed on the housing (2) and on an axially displaceable spindle rod (4) which is guided out of the housing (2), **characterised in that** the housing (2) is divided and a housing end-piece (12) which carries the housing-side articulation (14) is supported by means of a spring arrangement (68) on a part housing (10) which supports the actuation unit (50).

2. Brake actuator according to patent claim 1, the spring arrangement being a disc spring assembly (68).

3. Brake actuator according to patent claim 2, disc springs (81, 82) of the disc spring assembly (68) being arranged so as to function in series and further disc springs (84, 86) being arranged so as to function in parallel with each other.

4. Brake actuator according to any one of the preceding patent claims, a force measuring device (74) being provided in the housing end-piece (12).

5. Brake actuator according to patent claim 4, the force measuring device (4) having a piston (96) which is biased relative to a measurement sensor (102) by means of an axial pivot bearing (88, 92) and the spring arrangement (68).

6. Brake actuator according to any one of the preceding patent claims, the spring arrangement (68) being biased in an axial direction by means of an adjusting device (104), the spring arrangement (68) and the adjusting device (104) being constructed in such a manner that, when the brake is engaged, a remaining travel movement (H) is possible for emergency release of the brake engagement.

7. Brake actuator according to any one of the preceding patent claims, the adjusting device having two diametrically engaging clamping screws (104).

8. Brake actuator according to any one of the preceding patent claims, the actuation unit having a spindle nut (24) which is driven by the drive motor (16) and in which an axially displaceable spindle which carries the spindle rod (4) is arranged.

9. Brake actuator according to patent claim 8, the spindle being radially guided in the spindle nut (24) by means of two axially spaced bearings (44, 46).

10. Brake actuator according to patent claim 9, the engagement between the spindle nut (24) and spindle (4) being formed at the rear side in the region of the spring arrangement (68) and the radial guide (44, 46) being formed with axial spacing therefrom.

11. Brake actuator according to patent claim 10, the spindle nut (24) being driven in the region of the radial guide (44, 46).

12. Brake actuator according to any one of patent claims 8 to 11, the spindle nut (24) being arranged in the part housing (10).

13. Brake actuator according to any one of the preceding patent claims, the actuation unit being a roll screw drive (50).

## Revendications

1. Actionneur de frein électromécanique comprenant un carter (2) dans lequel est reçue du moins partiellement une unité d'actionnement (50) entraînée par un moteur d'entraînement (16), sur une tige de broche (4) déplaçable axialement sortie hors du carter (2) et sur le carter (2) des articulations (8, 14) pour des éléments d'actionnement de frein étant prévues, **caractérisé en ce que** le carter (2) est divisé, et une pièce terminale de carter (12) portant l'articulation (14) côté carter prend appui, par l'intermédiaire d'un ensemble de ressort (68), sur un carter partiel (10) supportant l'unité d'actionnement (50).

2. Actionneur de frein selon la revendication 1, l'ensemble de ressort étant un paquet de ressorts à disque (68).

3. Actionneur de frein selon la revendication 2, des ressorts à disque (81, 82) du paquet de ressorts à disque (68) étant disposés pour agir en série et d'autres ressorts à disque (84, 86) pour agir parallèlement les uns aux autres.

4. Actionneur de frein selon l'une quelconque des revendications précédentes, un dispositif capteur de force (74) étant prévu dans la pièce terminale de carter (12).

5. Actionneur de frein selon la revendication 4 le dispositif capteur de force (4) présentant un piston (96) qui est précontraint par rapport à un capteur de mesure (102) par l'intermédiaire d'une articulation à rotule axiale (88, 92) et de l'ensemble de ressort (68).

6. Actionneur de frein selon l'une quelconque des revendications précédentes, l'ensemble de ressort (68) étant précontraint dans la direction axiale au moyen d'un dispositif d'ajustage (104), l'ensemble de ressort (68) et le dispositif d'ajustage (104) étant conçus pour permettre, lorsque le frein est enclenché, une course résiduelle (H) pour le desserrage de secours de l'engagement du frein.

7. Actionneur de frein selon l'une quelconque des revendications précédentes, le dispositif d'ajustage présentant deux vis de serrage (104) agissant diamétralement.

8. Actionneur de frein selon l'une quelconque des revendications précédentes, l'unité d'actionnement présentant un écrou à broche (24) entraîné par le moteur d'entraînement (16) dans lequel est logée une broche déplaçable axialement portant la tige de broche (4).

9. Actionneur de frein selon la revendication 8, la broche étant guidée radialement dans l'écrou à broche (24) par l'intermédiaire de deux paliers (44, 46) distancés axialement.

10. Actionneur de frein selon la revendication 9, l'engagement entre l'écrou à broche (24) et la broche (4) étant prévu à l'arrière de la zone de l'ensemble de ressort (68) et le guidage radial (44, 46) à distance axiale de celle-ci.

11. Actionneur de frein selon la revendication 10, l'entraînement de l'écrou à broche (24) s'effectuant dans la zone du guidage radial (44, 46).

12. Actionneur de frein selon l'une quelconque des revendications 8 à 11, l'écrou à broche (24) étant logé dans le carter partiel (10).

13. Actionneur de frein selon l'une quelconque des revendications précédentes, l'unité d'actionnement étant un engrenage à rouleaux (50).
